(19) Europäisches Patentamt
European Patent Office
Office européen des brevets

(11) **EP 3 157 117 A1**

(12) **EUROPEAN PATENT APPLICATION**
published in accordance with Art. 153(4) EPC

(43) Date of publication:
**19.04.2017 Bulletin 2017/16**

(51) Int Cl.:
***H02J 1/00*** *(2006.01)*

(21) Application number: **15799319.7**

(86) International application number:
**PCT/JP2015/065090**

(22) Date of filing: **26.05.2015**

(87) International publication number:
**WO 2015/182604 (03.12.2015 Gazette 2015/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **29.05.2014 JP 2014111028**

(71) Applicant: **Nitto Denko Corporation**
**Ibaraki-shi, Osaka 567-8680 (JP)**

(72) Inventors:
• **TSUDA, Hisashi**
  **Ibaraki-shi**
  **Osaka 567-8680 (JP)**
• **HATANAKA, Takezo**
  **Ibaraki-shi**
  **Osaka 567-8680 (JP)**
• **VU, Nam Tung**
  **Ibaraki-shi**
  **Osaka 567-8680 (JP)**

(74) Representative: **Müller-Boré & Partner**
**Patentanwälte PartG mbB**
**Friedenheimer Brücke 21**
**80639 München (DE)**

(54) **WIRELESS POWER TRANSMISSION DEVICE**

(57) A comparator circuit 13 compares a value of current detected by a current detector 12 with a threshold. A first signal is output if the value is determined as to be equal to or more than the threshold. A second signal is output if the value is less than the threshold. Then, a logical operation is executed based on a signal output from the comparator circuit 13 and the signal (oscillation signal, pause signal) output from a signal oscillator 14. when the power-shut off condition is met; i.e., the signal from the comparator circuit 13 is the second signal and the signal from the signal oscillator 14 is the pause signal, a turn-off control signal which turns off power supply to the power-supplying module 2 is output to the oscillation output device 11, and a turn-on control signal which turns on the power supply to the power-supplying module 2 is output to the oscillation output device 11 otherwise.

FIG.1

EP 3 157 117 A1

**Description**

[TECHNICAL FIELD]

The present invention relates to a wireless power transmission apparatus configured to perform power transmission between a power-supplying module and a power-receiving module.

[BACKGROUND ART]

Portable electronic devices such as laptop PCs, tablet PCs, digital cameras, mobile phones, portable gaming devices, earphone-type music players, RF headsets, hearing aids, recorders, which are portable while being used by the user are rapidly increasing in recent years. Many of these portable electronic devices have therein a secondary battery, which requires periodical charging. For facilitating the work of charging the secondary battery of an electronic device, there have been an increasing number of devices configured to supply power to secondary batteries by using a power-supplying technology (wireless power transmission technology performing power transmission by varying the magnetic field) that performs wireless power transmission between a power-supplying module and a power-receiving module mounted in an electronic device.

As a wireless power transmission technology, there have been known, for example, a technology that performs power transmission by resonance phenomenon (magnetic resonant state) between resonators (coils) provided to a power-supplying device (power-supplying module) and a power-receiving device (power-receiving module) (e.g. see PTL 1).

In designing a power-supplying device and a power-receiving device which involve wireless power transmission technology, a power transmission efficiency which is a ratio of power supplied to the power-supplying device versus power received by the power-receiving device needs to be improved for the purpose of reducing power loss in the wireless power transmission.

As described in Background Art of PTL 2 (see paragraphs [0008] to [0010]) and the specification of PTL 3 describing a wireless power transmission system, it is commonly known to match the resonance frequency of resonators in a power-supplying device and a power-receiving device with the power-source frequency (drive frequency) of the power to be supplied to the power-supplying device (or alternatively, the power source frequency (drive frequency) is matched with the resonance frequency of the resonators in the power-supplying device and the power-receiving device) to maximize the power transmission efficiency in a wireless power supply (see paragraph [0013] of PTL 3), and such a setting is commonly done in pursuit of the maximum power transmission efficiency.

To perform wireless power transmission by coupling magnetic fields utilizing resonance phenomenon (magnetic resonant state) between the resonators (coils) of a power-supplying module and a power-receiving module, the power-receiving module needs to be brought close to the power-supplying module, within a distance which enables power supply from the power-supplying module to the power-receiving module (power-suppliable range). While the power-supplying module and the power-receiving module are not within the power-suppliable range (i.e., standby state) in such a use, power is kept being supplied to the power-supplying module to be prepared for the power-receiving module being brought closely to and arranged in the power-suppliable range, which consequently ends up wasting power (standby power consumption is increased).

In particular, if an input impedance of the power-supplying module during the standby state is lower than that of the power-supplying module during a power-supplying state, the value of a current flowing under a certain voltage becomes higher than the value of a current during the power-supplying state (formula: $I = V/Z_{in}$). This leads to an increase in the standby power consumption while it may cause an excessive heat generation on the power-supplying module.

The inventors of the present invention have found out that the value of a current flowing under a certain voltage while wireless power transmission is not taking place is brought lower than the value of the same while the wireless power transmission is taking place (see formula: $I = V/Z_{in}$) and the standby power consumption is restrained while heat generation or an Eddy current is restrained, with a wireless power transmission apparatus designed so that a transmission characteristic with respect to a power-source frequency of power, in a power-supplying resonator of a power-supplying module and a power-receiving resonator of a power-receiving module, exhibits two peak bands and a relation between a transmission input impedance (input impedance of the power-supplying module during the power-supplying state) to a non-transmission input impedance (input impedance of the power-supplying module during the standby state) satisfies a condition of the non-transmission input impedance > the transmission input impedance while the power-source frequency is set to a frequency band corresponding to a peak band on a higher side out of the two peak bands of the transmission characteristic, the transmission input impedance being input impedance while wireless power transmission is taking place between the power-supplying module and the power-receiving module, and the non-transmission input impedance being an input impedance during a non-transmission period in which no wireless power transmission is taking place.

Citation List

Patent Literatures

[PTL 1] Japanese Unexamined Patent Publication No. 2013-239692
[PTL2] Japanese Unexamined Patent Publication No. 2011-050140
[PTL 3] Japanese Unexamined Patent Publication No. 2012-182975

Summary of Invention

Technical Problem

To add the above, for further restraining standby power consumption (power consumption) during the standby state, it is conceivable to provide a detection unit (current detector and the like) to the power-supplying module or the power-receiving module for the purpose of detecting a change (change in the current) attributed to the positions of the power-supplying module and the power-receiving module, i.e., whether or not these modules are within the power-suppliable range, and control on and off of power supply to the power-supplying module, based on the detection result.
When such a detection unit is provided, the detection unit needs to operate at predetermined time intervals (intermittently operate), and power for such an operation of the detection unit may be required.
In view of the above problems, an object of the present invention is to provide a wireless power transmission apparatus in which power consumption is restrained and which allows smooth transition of on and off of wireless power supply.

Solution to Problem

An aspect of the present invention to achieve the above object is a wireless power transmission apparatus in which a transmission characteristic with respect to a power-source frequency of power, in a power-supplying resonator of a power-supplying module and a power-receiving resonator of a power-receiving module exhibits two peak bands, and a relation between a transmission input impedance to a non-transmission input impedance satisfies a condition of the non-transmission input impedance > the transmission input impedance, while the power-source frequency is set to a frequency band corresponding to a peak band on a higher side out of the two peak bands of the transmission characteristic, the transmission input impedance being input impedance while wireless power transmission is taking place between the power-supplying module and the power-receiving module, and the non-transmission input impedance being an input impedance during a non-transmission period in which no wireless power transmission is taking place, said wireless power transmission apparatus comprising:

an oscillation output device capable of switching on and off of power supply to the power-supplying module;
a current detector configured to detect a value of current input from the oscillation output device to the power-supplying module;
a comparator circuit configured to compare a value of current detected by the current detector with a threshold, output a first signal when the value of current detected by the current detector equals or surpasses the threshold, and output a second signal when the value of current detected by the current detector is smaller than the threshold, the threshold being set between a value of current input to the power-supplying module while wireless power supply is taking place between the power-supplying module and the power-receiving module and a value of current input to the power-supplying module while no wireless power transmission is taking place between the power-supplying module and the power-receiving module;
a signal oscillator configured to execute an intermittent operation in which an alternate output of oscillation signal and a pause signal is repeated at a predetermined cycle; and
a logic circuit configured to execute a logical operation based on a signal from the comparator circuit and a signal from the signal oscillator, wherein the logic circuit outputs a turn-off signal to the oscillation output device when the result of the logical operation meets a power-shut off condition such that the signal from the comparator circuit is the second signal and the signal from the signal oscillator is the pause signal, the turn-off control signal being a signal which turns off power supply of the oscillation output device to the power-supplying module, and wherein the logic circuit outputs a turn-on control signal when the result of the logical operation does not meet the power-shut off condition, the turn-on control signal being a signal which turns on power supply of the oscillation output device to the power-supplying module.

When the condition of non-transmission input impedance > transmission input impedance is met in the above structure, the input current value while wireless power transmission is taking place between the power-supplying module and the power-receiving module is brought up higher than the input current value while no wireless power transmission is taking place between the power-supplying module and the power-receiving module. A threshold is set between the input current value while the wireless power transmission is taking place and the input current value while no wireless power transmission is taking place.

When the value of current input from the oscillation output device to the power-supplying module, which value is detected by the current detector, equals to or surpasses the threshold, the comparator circuit outputs the first signal. In this case, the logic circuit outputs to the oscillation output device the turn-on control signal which turns on power supply of the oscillation output device to the power-supplying module whether the signal output from the signal oscillator is the oscillation signal or the pause signal, so as to turn on (supply) power supply to the power-supplying module.

To the contrary, when the value of current input from the oscillation output device to the power-supplying module, which value is detected by the current detector, is smaller than the threshold, the comparator circuit outputs the second signal.

In this case, the logic circuit outputs to the oscillation output device the turn-on control signal which turns on power supply of the oscillation output device to the power-supplying module when the signal output from the signal oscillator is the oscillation signal, so as to turn on (supply) power supply to the power-supplying module. Further, the logic circuit outputs to the oscillation output device the turn-off control signal which turns off power supply of the oscillation output device to the power-supplying module when the signal output from the signal oscillator is the pause signal (when the power-shut off condition is met; i.e., the signal from the comparator circuit is the second signal and the signal from the signal oscillator is the pause signal), so as to turn off (shut off) power supply to the power-supplying module.

With the structure of the wireless power transmission apparatus, power consumption is restrained by turning off (shutting off) the power supply to the power-supplying module, when transition occurs from the state where wireless power supply is taking place to the state where no wireless power supply is taking place.

Further, on and off of the power supply is repeated (intermittent operation) at a predetermined cycle while the power supply is not taking place, for the purpose of making transition from the state where the power supply is not taking place to the state where the wireless power supply is taking place. With this intermittent operation, the power supply to the power-supplying module is enabled upon a transition to the state where the power supply is possible between the power-supplying module and the power-receiving module. This restrains power consumption by the intermittent operation, and a smooth transition from the state of no power supply to the state where the power supply is taking place.

Another aspect of the present invention to achieve the above object is a wireless power transmission apparatus, wherein, where the power-source frequency is set at a frequency band corresponding to the peak band on the high frequency side out of the two peak bands of the transmission characteristic, the transmission input impedance, the abnormality input impedance, and a standby input impedance of the power-supplying module satisfy the relations of: the standby input impedance > transmission input impedance; the abnormality input impedance > transmission input impedance, the transmission input impedance being the input impedance of the wireless power transmission apparatus while the power-supplying resonator and the power-receiving resonator are positioned to face each other and the abnormality input impedance the input impedance of the wireless power transmission apparatus while a metal foreign matter is disposed nearby the power-supplying resonator; wherein a threshold is set between a transmission input current value and a standby input current value when the abnormality input impedance ≥ the standby input impedance, the transmission input current value being a value of an input current while the wireless power transmission is taking place between the power-supplying module and the power-receiving module and the standby input current value being a value of an input current while no wireless power transmission is taking place between the power-supplying module and the power-receiving module, and the power-supplying module is in the standby state for power transmission; and wherein a threshold is set between the transmission input current value and an abnormality input current value when the standby input impedance > the abnormality input impedance, the transmission input current value being a value of an input current while the wireless power transmission is taking place between the power-supplying module and the power-receiving module and an abnormality input current value being a value of an input current while a metal foreign matter is disposed nearby the power-supplying resonator of the power-supplying module.

In the above structure, the values of the standby input current value and the abnormality input current value are smaller than the threshold. Therefore, when a metal foreign matter is placed nearby the power-supplying resonator, while the wireless power transmission is taking place in the wireless power transmission apparatus, the power supply to the power-supplying module is turned off (shut off), thereby preventing problems (heat generation, Eddy current) caused by supplying power with the metal foreign matter nearby the power-supplying resonator.

Further, switching on and off of the power supply is repeated at a predetermined cycle (intermittent operation) even while the metal foreign matter is disposed nearby the power-supplying resonator of the power-supplying module, to enable wireless power transmission after a transition occurs from the state of having the metal foreign matter nearby the power-supplying resonator of the power-supplying module to the state for performing the wireless power transmission. With this intermittent operation, the power supply to the power-supplying module is enabled upon a transition to the state where the power supply is possible between the power-supplying module and the power-receiving module. This allows smooth transition from the state of having the metal foreign matter to the state for performing the wireless power transmission. Further, since the intermittent operation, during the state of having the metal foreign matter, permits the power supply to the power-supplying module only temporarily, it is possible to restrain problems such as heat generation or Eddy current caused by supplying power with the metal foreign matter nearby the power-supplying resonator. Advantageous Effects

There is provided a wireless power transmission apparatus in which power consumption is restrained and which allows smooth transition of on and off of wireless power supply.

Brief Description of Drawings

[FIG. 1] FIG. 1 is a structural diagram showing a wireless power transmission apparatus of an embodiment.
[FIG. 2] FIG.2 is an explanatory diagram illustrating the wireless power transmission apparatus of the embodiment, in the form of equivalent circuit.
[FIG. 3] FIG. 3 is an explanatory diagram of the wireless power transmission apparatus connected to a network analyzer.
[FIG. 4] FIG. 4 is an explanatory diagram of a transmission characteristic "S21" between resonators having two peaks.
[FIG. 5] FIG. 5 is a diagram showing a magnetic vector in an antiphase resonance mode.
[FIG. 6] FIG. 6 is a diagram showing a magnetic vector in an inphase resonance mode.
[FIG. 7] FIG. 7 is an explanatory diagram explaining a single-hump transmission characteristic "S21".
[FIG. 8] FIG. 8 is an explanatory diagram showing an equivalent circuit of the wireless power transmission apparatus in a normal charging state.
[FIG. 9] FIG. 9 is an explanatory diagram showing an equivalent circuit of the power-supplying module in a standby state.
[FIG. 10] FIG. 10 is an explanatory diagram showing an equivalent circuit of the power-supplying module in an abnormal state involving a metal foreign matter.
[FIG. 11] FIG. 11 is a diagram showing measurement results of measurement experiments.
[FIG. 12] FIG. 12 is a flowchart showing control of on and off of power supply.
[FIG. 13] FIG. 13 is a logical product table showing control of on and off of power supply.

[Description of Embodiments]

The following describes a wireless power transmission apparatus 1 used in a wireless power transmission of the present invention.

(Embodiment)

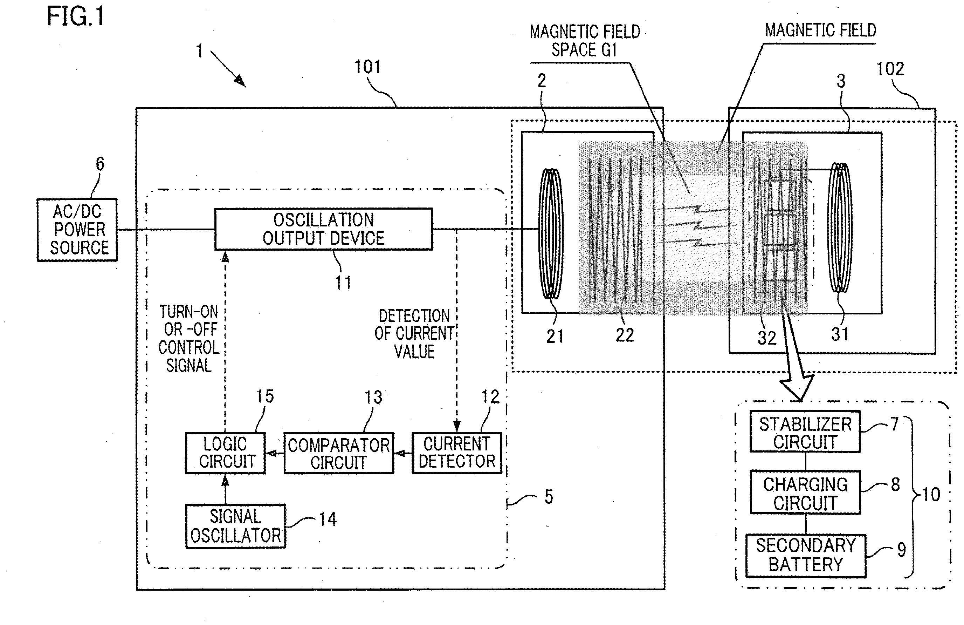

As an example of a wireless power transmission apparatus 1 which is capable of creating a magnetic field space G1 having a smaller magnetic field strength than that of a surrounding magnetic field strength (detailed later) and whose main structuring elements are a power-supplying module 2 including a power-supplying resonator 22 and a power-receiving module 3 including a power-receiving resonator 32, the present embodiment deals with a charger 101 having the power-supplying module 2 and an RF headset 102 having the power-receiving module 3, as shown in FIG. 1.

(Structures of Charger 101 and RF Headset 102)

The charger 101 includes the power-supplying module 2 having a power-supplying coil 21, a power-supplying resonator 22, as shown in FIG. 1. The RF headset 102 includes the power-receiving module 3 having a power-receiving coil 31 and a power-receiving resonator 32. The power-supplying coil 21 of the power-supplying module 2 is connected to an AC/DC power source 6 via a power source circuit 5. The power-receiving coil 31 of the power-receiving module 3 is connected to a secondary battery 9 via a charging circuit 8 configured to prevent overcharge and a stabilizer circuit 7 configured to rectify the power received. The stabilizer circuit 7, the charging circuit 8 and the secondary battery 9 are arranged on the inner circumferential side of the power-receiving resonator 32. On the inner circumferential side of the power-receiving resonator 32 where these stabilizer circuit 7, the charging circuit 8, and the secondary battery 9 are disposed, a magnetic field space G1 having a smaller magnetic field strength than the surrounding magnetic field strength is created at the time of charging, as hereinafter detailed. It should be noted that, as shown in FIG. 1, the stabilizer circuit 7, the charging circuit 8, and the secondary battery 9 of the present embodiment are a device 10 to be powered (hereinafter target device) which is the final destination of the supplied power. The target device 10 is a generic term for the entire device to which the supplied power is destined, which is connected to the power-receiving module 3.

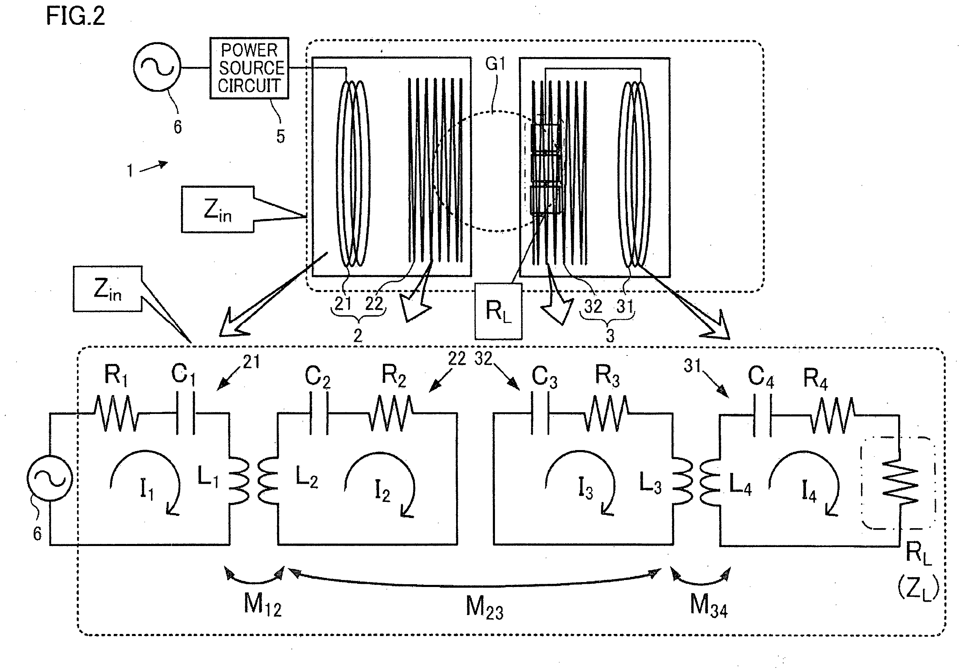

The power-supplying coil 21 plays a role of supplying power from the AC/DC power source 6 to the power-supplying resonator 22 via the power source circuit 5 by electromagnetic induction. As shown in FIG. 2, the power-supplying coil 21 is constituted by an RLC circuit whose elements include a resistor $R_1$, a coil $L_1$, and a capacitor $C_1$. As the coil $L_1$ is adopted a solenoid coil. The total impedance of a circuit element constituting the power-supplying coil 21 is $Z_1$. In the present embodiment, the $Z_1$ is the total impedance of the RLC circuit (circuit element) constituting the power-supplying coil 21, which includes the resistor $R_1$, the coil $L_1$, and the capacitor $C_1$. Further, the current that flows in the power-supplying coil 21 is $I_1$. It should be noted that the present embodiment deals with the RLC circuits as the example of the power-supplying coil 21; however the structure of an RL circuit is also adoptable.

The power-receiving coil 31 plays roles of receiving the power having been transmitted as a magnetic field energy from the power-supplying resonator 22 to the power-receiving resonator 32, by electromagnetic induction, and supplying the power received to the secondary battery 9 via the stabilizer circuit 7 and the charging circuit 8. As shown in FIG. 2, the power-receiving coil 31, similarly to the power-supplying coil 21, is constituted by an RLC circuit whose elements include a resistor $R_4$, a coil $L_4$, and a capacitor $C_4$. As the coil $L_4$ is adopted a solenoid coil. The total impedance of a circuit element constituting the power-receiving coil 31 is $Z_4$. In the present embodiment, the $Z_4$ is the total impedance of the RLC circuit (circuit element) constituting the power-receiving coil 31, which includes the resistor $R_4$, the coil $L_4$, and the capacitor $C_4$. The total impedance of the target device 10 (the stabilizer circuit 7, the charging circuit 8, and the secondary battery 9) connected to the power-receiving coil 31 is $Z_L$. Further, the current that flows in the power-receiving coil 31 is $I_4$. It should be noted that, as shown in FIG. 2, the total load impedance of the target device 10 (the stabilizer circuit 7, the charging circuit 8, and the secondary battery 9) connected to the power-receiving coil 31 is referred to as a resister $R_L$ (corresponding to $Z_L$), for the sake of convenience. It should be noted that the present embodiment deals with the RLC circuits as the example of the power-receiving coil 31; however the structure of an RL circuit is also adoptable.

As shown in FIG. 2, the power-supplying resonator 22 is constituted by an RLC circuit whose elements include a resistor $R_2$, a coil $L_2$, and a capacitor $C_2$. Further, as shown in FIG. 2, the power-receiving resonator 32 is constituted by an RLC circuit whose elements include a resistor $R_3$, a coil $L_3$, and a capacitor $C_3$. The power-supplying resonator 22 and the power-receiving resonator 32 each serves as a resonance circuit and plays a role of creating a magnetic resonant state. The magnetic resonant state (resonance phenomenon) here is a phenomenon in which two or more coils resonate with each other at a resonance frequency band. The total impedance of a circuit element constituting the power-supplying resonator 22 is $Z_2$. In the present embodiment, the $Z_2$ is the total impedance of the RLC circuit (circuit element) constituting the power-supplying resonator 22, which includes the resistor $R_2$, the coil $L_2$, and the capacitor $C_2$. The total impedance of a circuit element constituting the power-receiving resonator 32 is $Z_3$. In the present embodiment, the $Z_3$ is the total impedance of the RLC circuit (circuit element) constituting the power-receiving resonator 32, which includes the resistor $R_3$, the coil $L_3$, and the capacitor $C_3$. Further, the current that flows in the power-supplying resonator 22 is $I_2$, and the current that flows in the power-receiving resonator 32 is $I_3$.

In the RLC circuit which is the resonance circuit in each of the power-supplying resonator 22 and the power-receiving resonator 32, the resonance frequency is one which is derived from (Formula 1) below, where the inductance is L and the capacity of capacitor is C.

[Equation 1]

$$f = \frac{1}{2\pi\sqrt{LC}}$$

... (Formula 1)

Further, as the power-supplying resonator 22 and the power-receiving resonator 32 are used solenoid coils. The resonance frequency of the power-supplying resonator 22 and that of the power-receiving resonator 32 are matched with each other. The power-supplying resonator 22 and the power-receiving resonator 32 may be a spiral coil or a solenoid coil as long as it is a resonator using a coil.

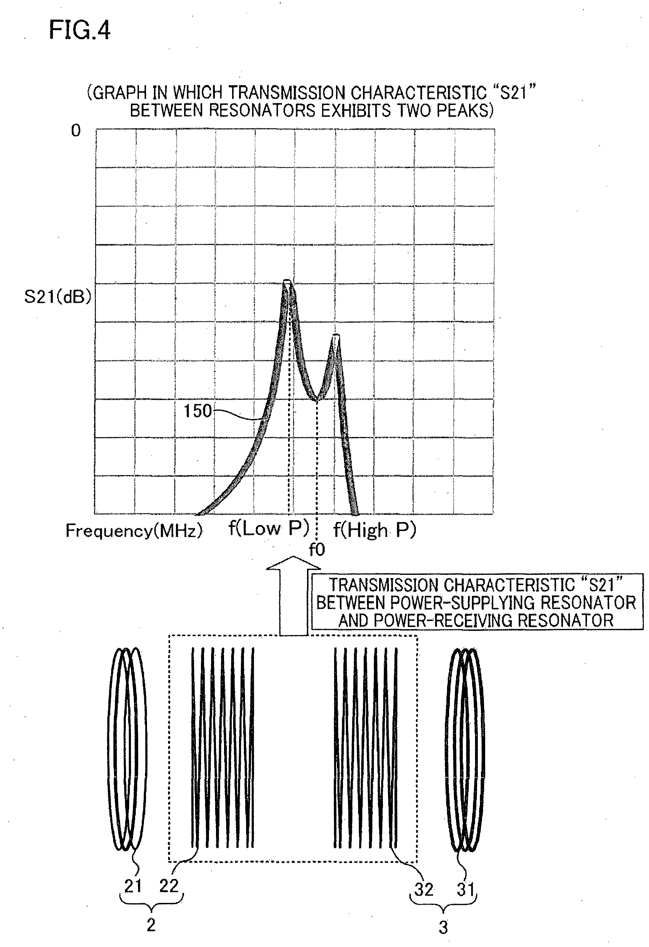

The distance between the power-supplying coil 21 and the power-supplying resonator 22 is d12, the distance between the power-supplying resonator 22 and the power-receiving resonator 32 is d23, and the distance between the power-receiving resonator 32 and the power-receiving coil 31 is d34 (see FIG. 4).

Further, as shown in FIG. 2, a mutual inductance between the coil $L_1$ of the power-supplying coil 21 and the

coil $L_2$ of the power-supplying resonator 22 is $M_{12}$, a mutual inductance between the coil $L_2$ of the power-supplying resonator 22 and the coil $L_3$ of the power-receiving resonator 32 is $M_{23}$, and a mutual inductance between the coil $L_3$ of the power-receiving resonator 32 and the coil $L_4$ of the power-receiving coil 31 is $M_{34}$. Further, in regard to the power-supplying module 2 and the power-receiving module 3, a coupling coefficient between the coil $L_1$ and the coil $L_2$ is denoted as $K_{12}$, a coupling coefficient between the coil $L_2$ and the coil $L_3$ is denoted as $K_{23}$, a coupling coefficient between the coil $L_3$ and the coil $L_4$ is denoted as $K_{34}$.

The above described wireless power transmission apparatus 1 (the power-supplying module 2 and the power-receiving module 3) enables magnetic resonant state (resonance phenomenon) to occur between the power-supplying resonator 22 and the power-receiving resonator 32. When a magnetic resonant state is created between the power-supplying resonator 22 and the power-receiving resonator 32 by having these resonators resonating with each other, power is transmitted from the power-supplying resonator 22 to the power-receiving resonator 32 as a magnetic field energy. Therefore, the power is transmitted wirelessly from the charger 101 having the power-supplying module 2 to the RF headset 102 having the power-receiving module 3, and the secondary battery 9 in the wireless headset 102 is charged.

(Formation of Magnetic Field Space)

The wireless power transmission apparatus 1 of the present embodiment allows formation of a magnetic field space G1 or a Magnetic field space G2 whose magnetic field strength is weakened to restrain the magnetic field strength occurring in and around the power-supplying module 2 and the power-receiving module 3. Specifically, as shown in FIG. 1 to FIG. 6, a magnetic field space G1 or a magnetic field space G2 having a magnetic field strength smaller than the surrounding magnetic field strength is formed nearby the power-supplying resonator 22 and the power-receiving resonator 32, when power is supplied from the power-supplying resonator 22 of the power-supplying module 2 to the power-receiving resonator 32 of the power-receiving module 3, utilizing a resonance phenomenon is conducted. Arranging an electronic device and the like in the magnetic field space G1 or the magnetic field space G2 reduces effects of magnetic field to the devices.

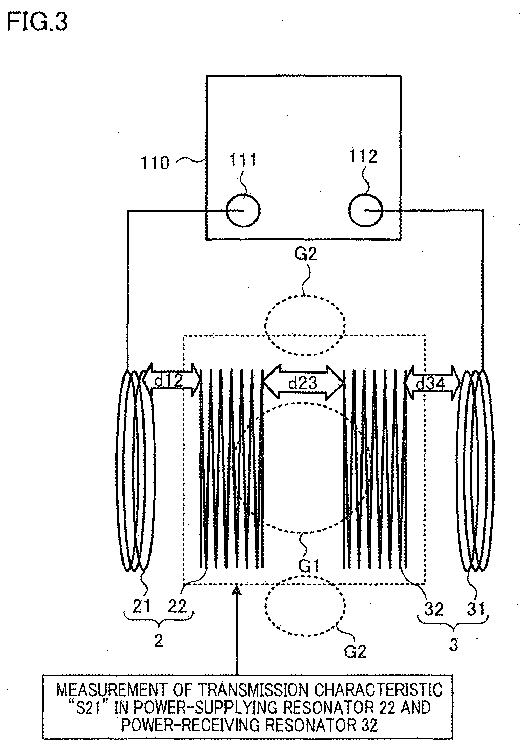

Formation of such a magnetic field space G1 or G2 is possible through a setting (design) such that a graph showing a transmission characteristic "S21" with respect to a power-source frequency in the power-supplying resonator 22 and the power-receiving resonator 32 exhibits two peak bands, and setting the power-source frequency of power to be supplied to the power-supplying module to a power-source frequency corresponding to any of the two peak bands. In the present embodiment, the power-source frequency is set to a power-source frequency corresponding to a peak band, out of the two peak bands, which is on a high frequency side, to create the magnetic field space G1 between the power-supplying resonator 22 and the power-receiving resonator 32, as shown in FIG. 1 to FIG. 6. To create the magnetic field space G2 outside the power-supplying resonator 22 and the power-receiving resonator 32 (see FIG. 3), the power-source frequency is set to a power-source frequency corresponding to the peak band, out of the two peak bands, which is on the low frequency side.

The transmission characteristic "S21" herein represents signals measured by connecting the wireless power transmission apparatus 1 (power-supplying module 2 and power-receiving module 3) to a network analyzer 110 (e.g., E5061B and the like produced by Agilent Technologies, Inc.; see FIG. 3), and is indicated in decibel. The greater the value is, the higher the power transmission efficiency. Further, the power transmission efficiency is a ratio of power supplied from the output terminal 111 to the power-supplying module 2 versus power output to the input terminal 112, while the wireless power transmission apparatus 1 is connected to the network analyzer 110.

More specifically, the transmission characteristic "S21" with respect to the power-source frequency in the power-supplying resonator 22 and the power-receiving resonator 32 is analyzed by using the network analyzer 110 while varying the power-source frequency of the AC power supplied to the power-supplying resonator 22. The horizontal axis of the graph on FIG. 4 represents the power-source frequency of the AC power output from the output terminal 111, and the vertical axis of the graph represents the transmission characteristic "S21". In the measurement of the transmission characteristic "S21" in the power-supplying resonator 22 and the power-receiving resonator 32, the transmission characteristic "S21" in the power-supplying resonator 22 and the power-receiving resonator 32 is not accurately measured if coupling between the power-supplying coil 21 and the power-supplying resonator 22 is strong, such a strong coupling influences the coupling status between the power-supplying resonator 22 and the power-receiving resonator 32. Therefore, a distance d12 between the power-supplying resonator 21 and the power-receiving resonator 32 needs to be maintained to a distance such that the power-supplying resonator 22 is sufficiently excited and a magnetic field is generated by the power-supplying resonator 22, yet coupling of the power-supplying coil 21 and the power-supplying resonator 22 is avoided as much as possible. For the similar reason, a distance d34 between the power-receiving resonator 32 and the power-receiving coil 31 also needs to be maintained at a distance such that the power-receiving resonator 32 is sufficiently excited and a magnetic field is generated by the power-receiving resonator 32, yet coupling between the power-receiving resonator 32 and the power-receiving coil 31 is avoided as much as possible. Further, designing is done so that analyzed waveform of the transmission characteristic "S21" in the power-supplying resonator 22 and the power-receiving resonator 32 exhibits two peak bands: a peak band on the low frequency side (f(Low P)) and a peak band on the high frequency side (f(High P)), as shown in FIG. 4 (see solid line 150).

It should be noted that the distance d23 between the power-supplying resonator 22 and the power-receiving resonator 32 is adjusted, and/or variable parameters of the power-supplying resonator 22 and the power-receiving resonator 32 are adjusted to achieve the transmission characteristic "S21" in the power-supplying resonator 22 and the power-receiving resonator 32, whose peak band in the analyzed waveform is split into two: on the high frequency side and the low frequency side. The variable parameters include the resistance value, inductance, and capacity of $R_2$, $L_2$, $C_2$ of the RLC circuit of the power-supplying resonator 22 and those of $R_3$, $L_3$, and $C_3$ of the RLC circuit of the power-receiving resonator 32, the coupling coefficient $k_{23}$, and the like.

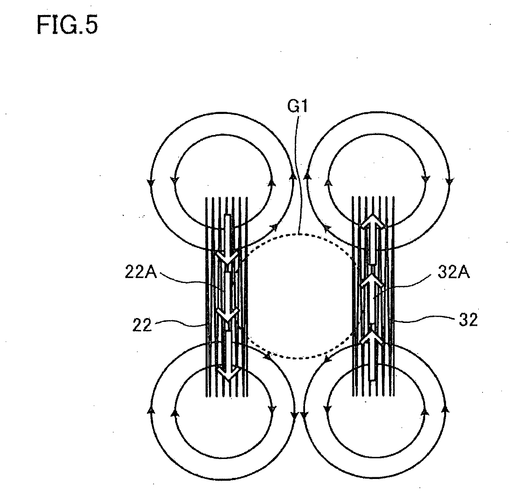

In cases where the analyzed waveform of the transmission characteristic "S21" in the power-supplying resonator 22 and the power-receiving resonator 32 has two peak bands and where the power-source frequency of the AC power supplied is set to the peak band (f(High P)) formed on the high frequency side, the power-supplying resonator 22 and the power-receiving resonator 32 is in a resonant state in antiphase, and the flow direction of the current (22A) in the power-supplying resonator 22 and the flow direction of the current (32A) in the power-receiving resonator 32 are opposite to each other, as shown in FIG. 5. As the result, as shown in the magnetic vector diagram on FIG. 5, the magnetic field occurring on the inner circumferential side of the power-supplying resonator 22 and the magnetic field occurring on the inner circumferential side of the power-receiving resonator 32 cancel each other. This reduces the influence of the magnetic field, and forms a magnetic field space G1 having a magnetic field strength smaller than that other than the magnetic field strength on the inner circumferential sides of the power-supplying resonator 22 and the power-receiving resonator 32 (e.g., smaller than the magnetic field strength on the outer circumference sides of the power-supplying resonator 22 and the power-receiving resonator 32). Such a resonant state in which the direction of the current flowing in the power-supplying resonator 22 and the direction of the current flowing in the power-receiving resonator 32 are opposite to each other is hereinafter referred to as an antiphase resonance mode.

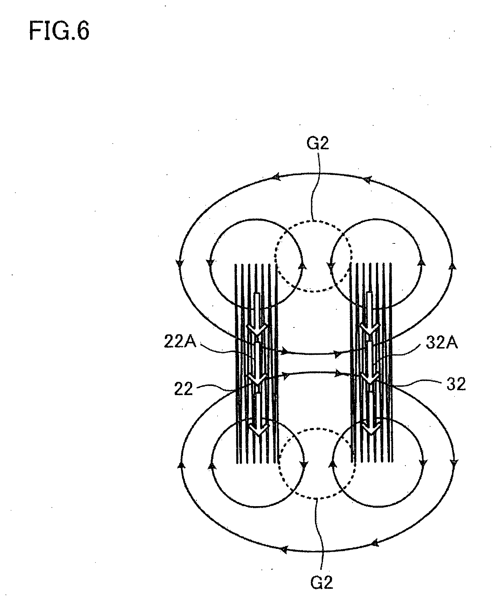

In cases where the analyzed waveform of the transmission characteristic "S21" in the power-supplying resonator 22 and the power-receiving resonator 32 has two peak bands and where the power-source frequency of the AC power supplied is set to the peak band (f(Low P)) formed on the low frequency side, the power-supplying resonator 22 and the power-receiving resonator 32 is in a resonant state in inphase, and the flow direction of the current (22A) in the power-supplying resonator 22 and the flow direction of the current (32A) in the power-receiving resonator 32 are the same, as shown in FIG. 6. As the result, as shown in the magnetic vector diagram on FIG. 6, the magnetic field occurring on the outer circumference side of the power-supplying resonator 22 and the magnetic field occurring on the outer circumference side of the power-receiving resonator 32 cancel each other. This reduces the influence of the magnetic field, and forms a magnetic field space G2 having a magnetic field strength smaller than that other than the magnetic field strength on the outer circumference side of the power-supplying resonator 22 and the power-receiving resonator 32 (e.g., smaller than the magnetic field strength on the inner circumferential side of the power-supplying resonator 22 and the power-receiving resonator 32). Such a resonant state in which the direction of the current flowing in the power-supplying resonator 22 and the direction of the current flowing in the power-receiving resonator 32 are the same is hereinafter referred to as an inphase resonance mode.

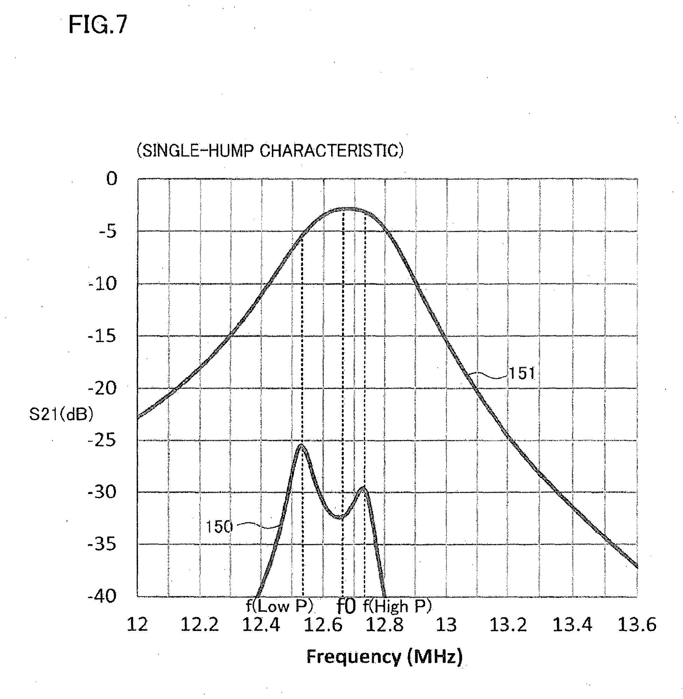

It should be noted that, in relation to the wireless power transmission apparatus 1, the setting in general is such that the transmission characteristic "S21" with respect to the power-source frequency in the power-supplying module 2 having the power-supplying coil 21 and the power-supplying resonator 22 and the power-receiving module 3 having the power-receiving resonator 32 and the power-receiving coil 31 has a single-hump characteristic, when plotted in a graph as shown in FIG. 7. The above mentioned single-hump characteristic is such that the transmission characteristic "S21" with respect to the power-source frequency has a single peak which occurs at the resonant frequency band (fo) (see solid line 151 on FIG. 7).

In cases of setting that achieves the single-hump characteristic, the transmission characteristic "S21" of the power-supplying module 2 and the power-receiving module 3 is maximum (power transmission efficiency is maximized) when the power-source frequency is at the band of the resonance frequency $f_0$ as shown in dotted line 151 on FIG. 7. Therefore, to maximize the power transmission efficiency in the wireless power transmission technology, it is typical to adopt a setting such that the transmission characteristic "S21" of the power-supplying module 2 and the power-receiving module 3 has the single-hump characteristic, and used with the power-source frequency set at the resonance frequency $f_0$.

(Standby State and Problems when Metal Foreign Matter is Closely Arranged)

While the power-supplying module 2 and the power-receiving module 3 are not within the power-suppliable range (i.e., standby state), power is kept being supplied to the power-supplying module 2 to be prepared for the power-receiving module 3 being brought closely to the power-suppliable range, which consequently ends up wasting power (standby power consumption is increased).

Further, if a metal foreign matter (such as a coin, a nail, a clip, a key, and the like) is placed between the power-supplying module 2 and the power-receiving module 3 or nearby the power-supplying module 2, the metal foreign matter is affected by the magnetic field, thus leading to an Eddy current. The Eddy current may cause the metal foreign matter or the power-supplying module 2 to excessively heat up.

In view of that, the present embodiment focuses on the fact that the value of current in the standby state becomes lower than the value of the current in the normal charging state thus restraining the standby power consumption under a certain voltage, with a setting such that the input impedance $Z_{in}$ (W) of the power-supplying module 2 while the power-supplying module 2 is waiting for power supply (standby state: Waiting, corresponding to the standby input impedance) results in a higher value than the value of the input impedance $Z_{in}$ (T) of the wireless power transmission apparatus 1 while normal charging is taking place (i.e., normal charging state: Transmission, corresponding to the transmission input impedance).

It is also focused on the fact that the value of the current in the abnormal state becomes lower than the value of the current in the normal charging state, thus lowering the power consumption in the abnormal state and restraining an excessive heat generation in the power-supplying module 2 including the metal foreign matter, with a setting such that the input impedance $Z_{in}$ (A) of the power-supplying module 2 including the metal foreign matter, while the metal foreign matter is nearby the power-supplying module 2 (i.e., abnormal state: Abnormality, corresponding to the abnormality input impedance) results in a higher value than the value of the input impedance $Z_{in}$ (T) of the wireless power transmission apparatus 1 while the normal charging is taking place (i.e., normal charging state: Transmission, corresponding to transmission input impedance).

It should be noted that the input impedance $Z_{in}$(W) (standby state: Waiting, standby input impedance) and the input impedance $Z_{in}$ (A) (abnormal state: Abnormality, abnormality input impedance) fall within the broad meaning of the non-transmission input impedance which is the impedance while no wireless power transmission is taking place.

Using the wireless power transmission apparatus 1, the values of: the input impedance $Z_{in}$ (A) of the power-supplying module 2 including the metal foreign matter while the metal foreign matter is nearby the power-supplying module 2; the input impedance $Z_{in}$ (T) of the wireless power transmission apparatus 1 while normal charging is taking place; and the input impedance $Z_{in}$ (W) of the power-supplying module 2 while the power-supplying module 2 is waiting to perform power supply are measured and studied.

(Measurement Experiments)

In the wireless power transmission apparatus 1 used in the measurement experiments, the power-supplying coil 21 was constituted by an RLC circuit whose elements included a resister $R_1$, coil $L_1$, and a capacitor $C_1$. The coil $L_1$ was made of a copper wire material (coated by an insulation film) whose wire diameter is 0.14 mm, and the coil diameter was set to 11 mmφ mmφ. Further, the power-supplying resonator 22 was constituted by an RLC circuit whose elements included a resistor $R_2$, a coil $L_2$, and a capacitor $C_2$, and adopted a solenoid coil made by a copper wire whose wire diameter is 0.2 mm. The coil diameter was set to 11 mmφ. Further, the power-receiving resonator 32 was constituted by an RLC circuit whose elements included a resistor $R_3$, a coil $L_3$, and a capacitor $C_3$, and adopted a solenoid coil of a copper wire material whose wire diameter is 0.1 mm. The coil diameter was set to 8mmφ. Further, the power-receiving coil 31 is constituted by an RLC circuit whose elements included a resistor $R_4$, a coil $L_4$, and a capacitor $C_4$. The coil $L_4$ was made by a copper wire material whose wire diameter was 0.1 mm, and the coil diameter was set to 8mmφ. On the inner circumferential side of the power-supplying coil 21 and the power-supplying resonator 22 is arranged a cylindrical magnetic material of 300 μm in thickness, for further reducing the magnetic field strength of the magnetic field space G1 to be formed. Similarly, on the inner circumferential side of the power-receiving resonator 32 and the power-receiving coil 31 is arranged a cylindrical magnetic material of 300 μm in thickness. The values of $R_1$, $R_2$, $R_3$, $R_4$ in the wireless power transmission apparatus 1 used in Measurement Experiments 1 to 4 were set to 1.5Ω, 2.6Ω, 2.1Ω, and 0.6Ω, respectively. Further, the values of $L_1$, $L_2$, $L_3$, $L_4$ were set to 13 μH, 18 μH, 7 μH, and 2.5 μH, respectively. Further, the values of $C_1$, $C_2$, $C_3$, $C_4$ were set to 2 nF, 1.4 nF, 3.6 nF, and 10 nF, respectively. The resonance frequency of the power-supplying resonator 22 and that of the power-receiving resonator 32 was 1MHz. The coupling coefficient $k_{12}$ was 0.32, the coupling coefficient $k_{23}$ was 0.15, and the coupling coefficient $k_{34}$ was 0.93.

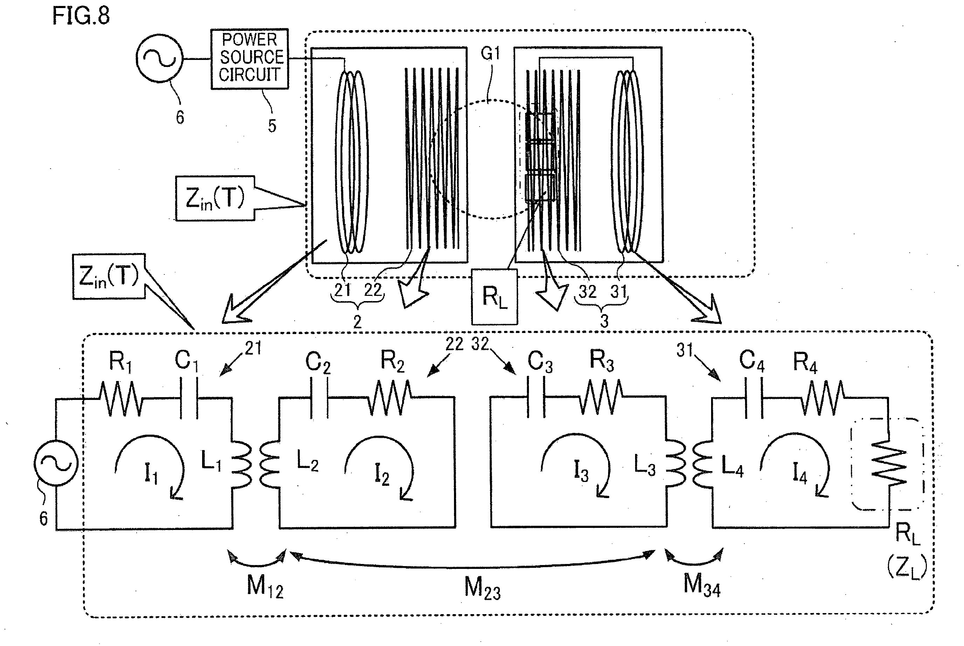

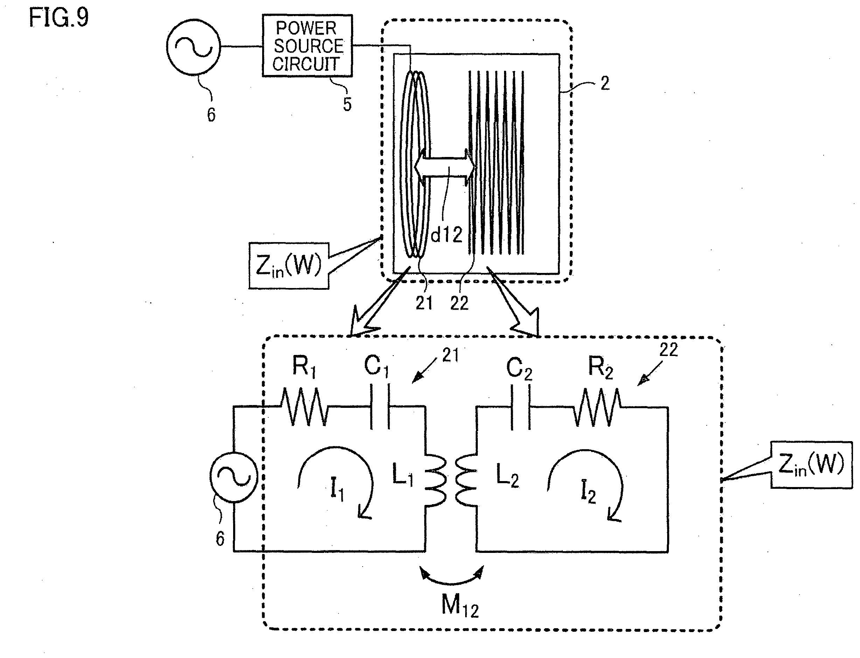

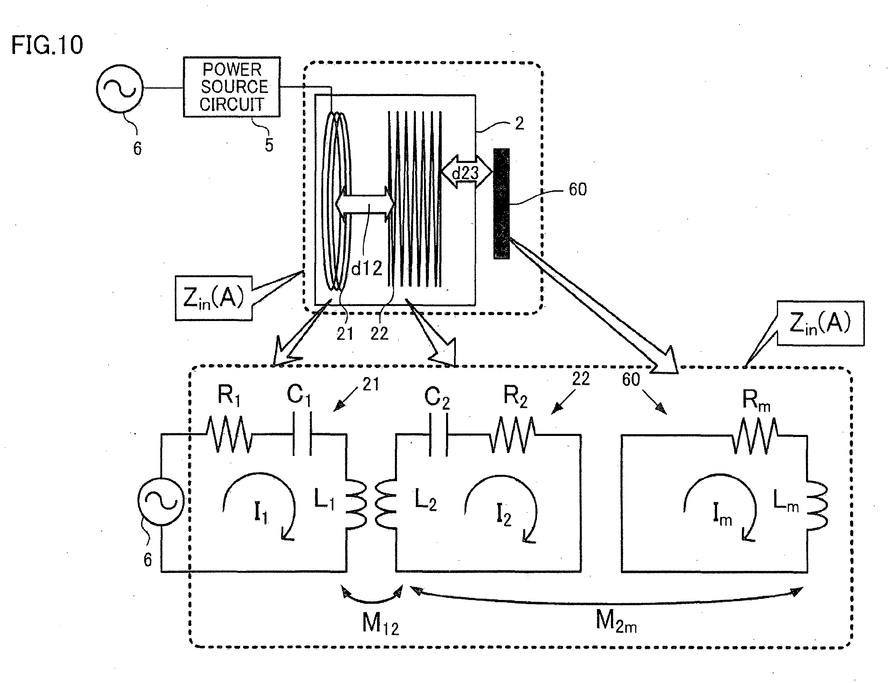

The measurement experiments adopt an impedance analyzer (in the present embodiment, E5061B produced by Agilent Technologies, Inc.) was used to measure the input impedance $Z_{in}$ (T) of the wireless power transmission apparatus 1 while normal charging is taking place as shown in FIG. 8, the input impedance $Z_{in}$ (W) of the power-supplying module 2 while the power-supplying module 2 is waiting to perform wireless power transmission as shown in FIG. 9, and the input impedance $Z_{in}$(A) of the power-supplying module 2 including a metal foreign matter while the metal foreign matter is nearby the power-supplying module 2 as shown in FIG. 10. Further, aluminum was adopted as the metal foreign matter in the measurement of the measurement experiments. It should be noted that a 100Ω resistor ($R_L$) was used in place of the stabilizer circuit 7, the charging circuit 8, and the secondary battery 9. In the measurement of the input impedance $Z_{in}$ (A) of the power-supplying module 2 including the metal foreign matter, measurements were conducted with the distance d23 between the power-supplying resonator 22 and the metal foreign matter 60 set to 3 mm and 2 mm, as shown in FIG. 10. Further, the resonance frequency $f_0$ was 1 MHz and the frequency (f(Low P)) in the peak band in the inphase resonance mode was 0.94 MHz. The frequency (f(High P)) in the peak band in the antiphase resonance mode was 1.05 MHz.

(Measurement Experiments)

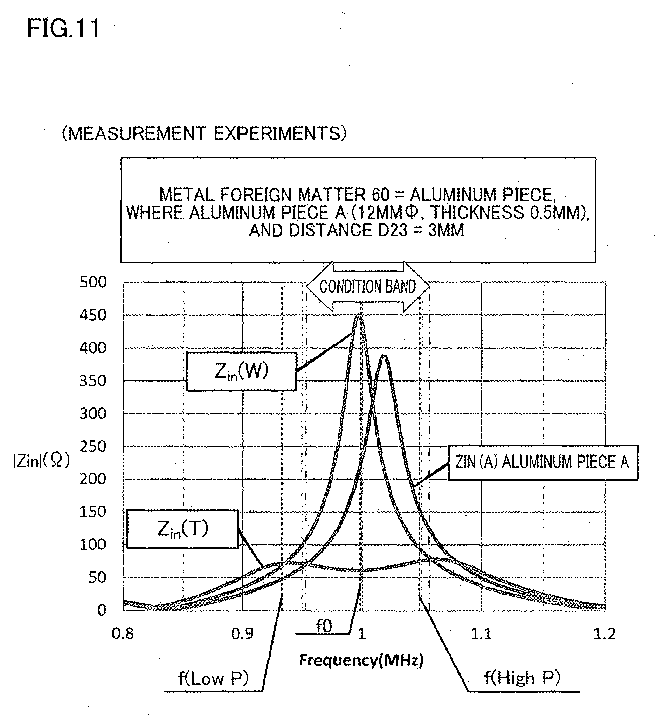

In the measurement experiments, measurements were conducted for the input impedance $Z_{in}(T)$, the input impedance $Z_{in}(W)$, and the input impedance $Z_{in}(A)$ where the metal foreign matter 60 was a cylindrical aluminum piece A which is 12mmφ in diameter, and 0.5mm in thickness, and where the distance d23 between the power-supplying resonator 22 and the metal foreign matter 60 was 3 mm. The measurement results are shown in FIG. 11.

As should be seen in the measurement results on FIG. 11 (Aluminum piece A, d23 = 3 mm), a condition band that satisfies the relation of the input impedance $Z_{in}(W)$ > input impedance $Z_{in}(T)$ and the input impedance $Z_{in}(A)$(Aluminum piece A) > input impedance $Z_{in}(T)$ is formed in a range of 0.955 MHz to 1.06 MHz. From this, by setting the power-source frequency to the range of the condition band (0.955 MHz to 1.06 MHz), the value of the current in the standby state becomes lower than the value of the current in the normal charging state, thus restraining the standby power consumption, under a certain voltage, and the value of the current in the abnormal state becomes lower than the value of the current in the normal charging state, thus restraining an excessive heat generation in the power-supplying module 2 including the metal foreign matter, under a certain voltage.

Further, as mentioned above, the present embodiment enables formation of a magnetic field space G1 or G2. In this case, it is understood that the power-source frequency is within the condition band (0.955 MHz to 1.06 MHz), and the frequency that enables formation of a magnetic field space is the frequency band (f(High P)) in the antiphase resonance mode (the frequency band (f(Low P)) in the inphase resonance mode is out of the range of the above condition band).

(Design Equation of Input Impedances $Z_{in}$ (A), $Z_{in}$ (W), $Z_{in}$ (T))

Based on the above, in the present invention, designing is done so as to satisfy the relation of the input impedance $Z_{in}(W)$ > input impedance $Z_{in}(T)$ and the relation of the input impedance $Z_{in}(A)$(Aluminum piece A) > input impedance $Z_{in}(T)$, when the power-source frequency is set to the frequency band (f(High P)) in the antiphase resonance mode.

Specifically, FIG. 8 shows an equivalent circuit of the structure of the wireless power transmission apparatus 1 including a target device 10, for deriving the input impedance $Z_{in}(T)$ in the normal charging state. Based on the equivalent circuit on FIG. 9, the input impedance $Z_{in}(T)$ is expressed as (Formula 2) below.

[Equation 2]

$$Z_{in} = Z_1 + \cfrac{(\omega M_{12})^2}{Z_2 + \cfrac{(\omega M_{23})^2}{Z_3 + \cfrac{(\omega M_{34})^2}{Z_4 + Z_L}}}$$

$$M_{12} = k_{12}\sqrt{L_1 L_2} \qquad M_{23} = k_{23}\sqrt{L_2 L_3} \qquad M_{34} = k_{34}\sqrt{L_3 L_4}$$

$$(k_{ij} \text{ is a coupling coefficient between } L_i \text{ and } L_j)$$

$$\dots \text{(Formula 2)}$$

The impedances $Z_1$, $Z_2$, $Z_3$, $Z_4$, and $Z_L$ of the power-supplying coil 21, the power-supplying resonator 22, the power-receiving resonator 32, and the power-receiving coil 31 of the wireless power transmission apparatus 1 of the present embodiment are expressed as (Formula 3) below.

[Equation 3]

$$Z_1 = R_1 + j\left(\omega L_1 - \frac{1}{\omega C_1}\right)$$

$$Z_2 = R_2 + j\left(\omega L_2 - \frac{1}{\omega C_2}\right)$$

$$Z_3 = R_3 + j\left(\omega L_3 - \frac{1}{\omega C_3}\right)$$

$$Z_4 = R_4 + j\left(\omega L_4 - \frac{1}{\omega C_4}\right)$$

$$Z_L = R_L$$

$$\cdots \text{(Formula 3)}$$

Next, introducing the (Formula 3) into (Formula 2) gives (Formula 4). [Equation4]

$$Z_{in}(T)$$

$$= R_1 + j\left(\omega L_1 - \frac{1}{\omega C_1}\right) + \cfrac{(\omega M_{1\,2})^2}{R_2 + j\left(\omega L_2 - \frac{1}{\omega C_2}\right) + \cfrac{(\omega M_{2\,3})^2}{R_3 + j\left(\omega L_3 - \frac{1}{\omega C_3}\right) + \cfrac{(\omega M_{3\,4})^2}{R_4 + j\left(\omega L_4 - \frac{1}{\omega C_4}\right) + R_L}}}$$

$$\cdots \text{(Formula 4)}$$

Further, FIG. 9 shows an equivalent circuit of the structure of the power-supplying module 2, for deriving the input impedance $Z_{in}(W)$ in the standby state. Then, based on the equivalent circuit of FIG. 9, the input impedance $Z_{in}(W)$ is expressed as (Formula 5) below.
[Equation 5]

$$Z_{in}(W) = \left[ R_1 + \frac{(\omega M_{12})^2 R_2}{R_2^2 + \left( \omega L_2 - \dfrac{1}{\omega C_2} \right)^2} \right] + j \left[ \omega L_1 - \frac{1}{\omega C_1} - \frac{(\omega M_{12})^2 \left( \omega L_2 - \dfrac{1}{\omega C_2} \right)}{R_2^2 + \left( \omega L_2 - \dfrac{1}{\omega C_2} \right)^2} \right]$$

$$\cdots \text{(Formula 5)}$$

Further, FIG. 10 shows an equivalent circuit of the structure of the power-supplying module 2 including a metal foreign matter 60, for deriving the input impedance $Z_{in}$ (A) of the power-supplying module 2 including the metal foreign matter 60 in a state where the metal foreign matter 60 is nearby the power-supplying module 2. Here, the metal foreign matter 60 was simulated by an RL circuit with a resistor $R_m$ and a coil $L_m$ (the mutual inductance between the coil $L_2$ of the power-supplying resonator 22 and the coil $L_m$ of the metal foreign matter 60 was $M_{2m}$ and the coupling coefficient between the coil $L_2$ and the coil $L_m$ was $k_{2m}$). Then, with the equivalent circuit of FIG. 10, the input impedance $Z_{in}$ (A) is expressed as (Formula 6).

[Equation 6]

$$Zin(A) = \left( R_1 + \frac{(\omega M_{12})^2 \left( R_2 + \dfrac{(\omega M_{2m})^2 R_m}{R_m^2 + (\omega L_m)^2} \right)}{\left( R_2 + \dfrac{(\omega M_{2m})^2 R_m}{R_m^2 + (\omega L_m)^2} \right)^2 + \left( \omega L_2 - \dfrac{1}{\omega C_2} - \dfrac{(\omega M_{2m})^2 \omega L_m}{R_m^2 + (\omega L_m)^2} \right)^2} \right)$$

$$+ j \left( \omega L_1 - \frac{1}{\omega C_1} - \frac{(\omega M_{12})^2 \left( \omega L_2 - \dfrac{1}{\omega C_2} - \dfrac{(\omega M_{2m})^2 \omega L_m}{R_m^2 + (\omega L_m)^2} \right)}{\left( R_2 + \dfrac{(\omega M_{2m})^2 R_m}{R_m^2 + (\omega L_m)^2} \right)^2 + \left( \omega L_2 - \dfrac{1}{\omega C_2} - \dfrac{(\omega M_{2m})^2 \omega L_m}{R_m^2 + (\omega L_m)^2} \right)^2} \right)$$

$$\cdots \text{(Formula 6)}$$

Based on the above, designing is done so that the relations of the input impedances $Z_{in}$ for the set power-source frequency satisfy the input impedance $Z_{in}$(W) > input impedance $Z_{in}$ (T) and the relation of the input impedance $Z_{in}$ (A)(Aluminum piece A) > input impedance $Z_{in}$ (T), when the power-source frequency is set to the frequency band (f(High P)) in the antiphase resonance mode, based on (Formula 4) to (Formula 6) expressed in the form of the above equivalent circuits.

It should be noted that, in order to achieve the designing that satisfies the relations of the input impedance $Z_{in}$(W) > the input impedance $Z_{in}$ (T) and the input impedance $Z_{in}$ (A) (Aluminum piece A) > input impedance $Z_{in}$ (T) based on (Formula 4) to (Formula 6) expressed in the form of the above equivalent circuits, the resistance values, inductances, capacities, mutual inductances of the $R_1$, $L_1$, $C_1$ of the RLC circuit of the power-supplying coil 21, the $R_2$, $L_2$, $C_2$ of the RLC circuit of the power-supplying resonator 22, the $R_3$, $L_3$, $C_3$ of the RLC circuit of the power-receiving resonator 32, the $R_4$, $L_4$, $C_4$ of the RLC circuit of the power-receiving coil 31, the coupling coefficients $k_{12}$, $k_{23}$, and $k_{34}$, and the like are used as variable parameters in the designing and manufacturing stage and the like.

(Power Source Circuit 5)

In the present embodiment, the power source circuit 5 is disposed between and connected to the AC/DC power source 6 and the power-supplying module 2, as shown in FIG. 2. The power source circuit 5 includes: an oscillation output device 11, the current detector 12, a comparator circuit 13, a signal oscillator 14, and a logic circuit 15.

The oscillation output device 11 includes an oscillator (an inverter circuit and the like) which sets the power-source frequency of the power to a predetermined value; and a switching circuit capable of switching on and off of the power supply to the power-supplying module 2, based on control signals (later described turn-on control signals and turn-off control signals) from outside.

The current detector 12 is an ammeter capable of detecting the value of the current output from the oscillation output device 11 to the power-supplying module 2. It should be noted that the value of current is measured by measuring the voltage in the present embodiment.

The comparator circuit 13 compares the value of the current detected by the current detector 12 with a preset threshold, and outputs a Low [0] (first signal) when the value of the current detected by the current detector 12 equals to or surpasses the threshold, and outputs a High [1] (second signal) when the value of the current detected by the current detector 12 is less than the threshold.

The threshold here is set between the value of the current input to the power-supplying module 2 while the wireless power transmission is taking place from the power-supplying module 2 to the power-receiving module 3 and the value of the current input to the power-supplying module 2 while not wireless power transmission is taking place from the power-supplying module 2 to the power-receiving module 3.

Specifically, while the input impedance $Z_{in}$ (A) $\geq$ the input impedance $Z_{in}$ (W), the threshold is set between the value of current (transmission input current value) while the wireless power transmission is taking place between the power-supplying module 2 and the power-receiving module 3 (normal charging state) and the value of current (standby input current value) during the standby state. Specifically, while the input impedance $Z_{in}$ (W) > the input impedance $Z_{in}$ (A), the threshold is set between the value of current (transmission input current value) while the wireless power transmission is taking place between the power-supplying module 2 and the power-receiving module 3 (normal charging state) and the value of current (abnormality input current value) while the metal foreign matter 60 is disposed nearby the power-supplying resonator 22 of the power-supplying module 2 (abnormal state). It should be noted that the threshold may be freely set as long as these conditions are satisfied.

The signal oscillator 14 performs an intermittent operation which repeats alternated output of the Low [0] (oscillation signal) and High [1] (pause signal), at a predetermined cycle. The predetermined cycle may be freely set as a duty ratio.

The logic circuit 15 performs an AND operation based on the Low [0] (first signal) or the High [1] (second signal) output from the comparator circuit 13, and the Low [0] (oscillation signal) or the High [1] (pause signal) output from the signal oscillator 14, and outputs to the oscillation output device 11 the turn-off control signal which turns off power supply to the power-supplying module 2, if the logical product is High [1] (when power-shut off condition is satisfied). To the contrary, if the logical product is Low [0] as the result of the AND operation (when the power-shut off condition is not satisfied), the turn-on control signal which turns on the power supply to the power-supplying module 2 is output to the oscillation output device 11.

It should be noted that, while the present embodiment adopts an AND circuit as the logic circuit 15, an OR circuit may be adopted as the logic circuit 15. In this case, the first signal and the second signal output from the comparator circuit 13 are High [1] and Low [0], respectively, and the oscillation signal and the pause signal output from the signal oscillator 14 are High [1] and Low [0], respectively. Then, an OR operation is performed based on the Low [0] (second signal) or High [1] (first signal) output from the comparator circuit 13 and the Low [0] (pause signal) or the High [1] (oscillation signal) output from the signal oscillator 14. If the logical sum is High [1], the turn-on control signal which turns on the power supply to the power-supplying module 2 is output to the oscillation output device 11. To the contrary, if the logical sum is Low [0] as the result of the OR operation (when the power-shut off condition is satisfied), the turn-off control signal which turns off the power supply to the power-supplying module 2 is output to the oscillation output device 11.

(Power Supply On/Off Control flow)

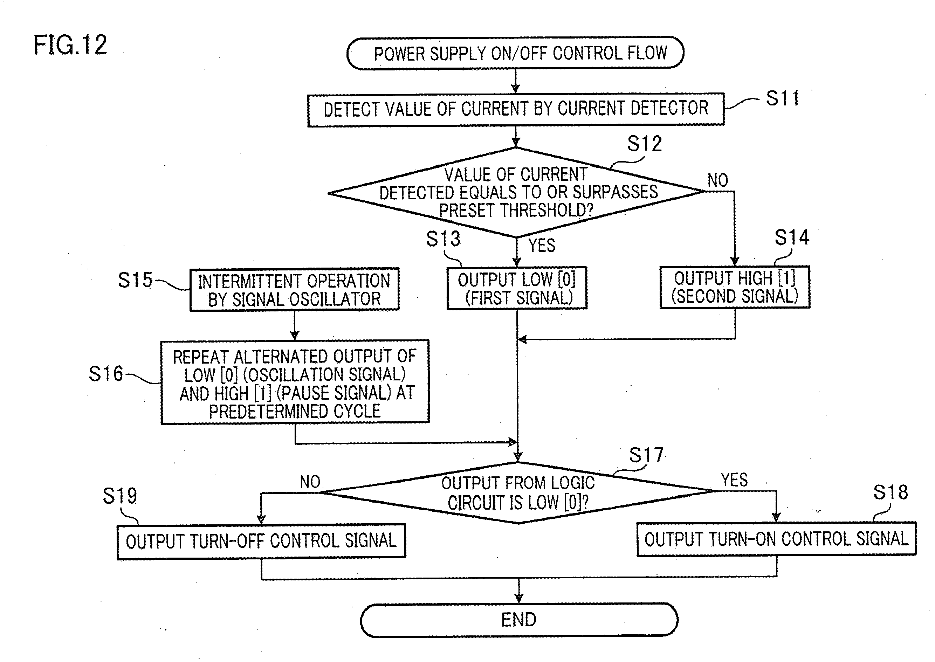

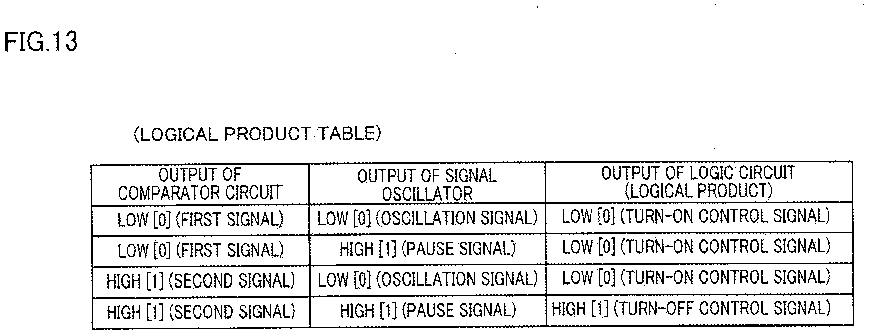

Next, the following describes a power supply on/off control executed by the power source circuit 5, with references to the flowchart on FIG. 12 and a logical product table on FIG. 13.

First, a value of the current is detected by the current detector 12 (S11). The comparator circuit 13 determines whether or not the value of the current detected equals to or surpasses the above mentioned threshold (preset) (S12).

When the value of the current detected equals to or surpasses the threshold (S12: YES), the comparator circuit 13 outputs to the logic circuit 15 the Low [0] (first signal) (S13). When the value of the current detected does not equal to or surpass the threshold (S12: NO), the comparator circuit 13 outputs to the logic circuit 15 the High [1] (second signal) (S14).

Further, the signal oscillator 14 executes the intermittent operation (S 15). Specifically, the signal oscillator 14 repeats alternated output of the Low [0] (oscillation signal) and High [1] (pause signal) to the logic circuit 15, at a predetermined cycle (S16).

Next, the logic circuit 15 performs an AND operation (see FIG. 13) based on the Low [0] (first signal) or the High [1] (second signal) output from the comparator circuit 13, and the Low [0] (oscillation signal) or the High [1] (pause signal) output from the signal oscillator 14, and determines whether or not the logical product is Low [0] (S17).

If the logical product is Low [0] (S17: Yes), the turn-on control signal which turns on the power supply to the power-supplying module 2 is output to the oscillation output device 11 (S18). As the result, the oscillation output device 11 performs power supply to the power-supplying module 2 (switching circuit: ON).

On the other hand, if the logical product is not Low [0] (i.e., the logical product is High[1]) (S 17: No), the turn-off control signal which turns off the power supply to the power-supplying module 2 is output to the oscillation output device 11 (S 19). As the result, the oscillation output device 11 shuts off the power supply to the power-supplying module 2 (switching circuit: OFF).

The on/off of the power supply is controlled by repeating the above steps.

(Effects)

When the condition of the input impedance $Z_{in}$(A) and the input impedance $Z_{in}$ (W) (non-transmission input impedance) > input impedance $Z_{in}$ (T) (transmission input impedance) is met in the above structure, the input current value while wireless power transmission is taking place between the power-supplying module 2 and the power-receiving module 3 (normal charging state) is brought up higher than the input current value while no wireless power transmission is taking place between the power-supplying module 2 and the power-receiving module 3 (standby state, abnormal state). A threshold is set between the input current value while the wireless power transmission is taking place and the input current value while no wireless power transmission is taking place.

When the value of current input from the oscillation output device 11 to the power-supplying module 2, which value is detected by the current detector 12, equals to or surpasses the threshold, the comparator circuit 13 outputs the first signal. In this case, the logic circuit 15 outputs to the oscillation output device 11 the turn-on control signal which turns on power supply to the power-supplying module 2 whether the signal output from the signal oscillator 14 is the oscillation signal or the pause signal, so as to turn on (supply) power supply to the power-supplying module 2.

To the contrary, when the value of current input from the oscillation output device 11 to the power-supplying module 2, which value is detected by the current detector 12, is smaller than the threshold, the comparator circuit 13 outputs the second signal.

In this case, the logic circuit 15 outputs to the oscillation output device 11 the turn-on control signal which turns on power supply to the power-supplying module 2 when the signal output from the signal oscillator 14 is the oscillation signal, so as to turn on (supply) power supply to the power-supplying module 2. Further, the logic circuit 15 outputs to the oscillation output device 11 the turn-off control signal which turns off power supply to the power-supplying module 2 when the signal output from the signal oscillator 14 is the pause signal (when the power-shut off condition is met; i.e., the signal from the comparator circuit 13 is the second signal and the signal from the signal oscillator 14 is the pause signal), so as to turn off (shut off) power supply to the power-supplying module 2.

With the structure of the wireless power transmission apparatus 1, power consumption is restrained by turning off (shutting off) the power supply to the power-supplying module 2, when transition occurs from the state where wireless power supply is taking place to the state where no wireless power supply is taking place.

Further, on and off of the power supply is repeated (intermittent operation) at a predetermined cycle while the power supply is not taking place, for the purpose of making transition from the state where the power supply is not taking place to the state where the wireless power supply is taking place. With this intermittent operation, the power supply to the power-supplying module 2 is enabled upon a transition to the state where the power supply is possible between the power-supplying module 2 and the power-receiving module 3. This restrains power consumption by the intermittent operation, and a smooth transition from the state of no power supply to the state where the power supply is taking place.

In the above structure, the values of current in the standby state and that while the metal foreign matter 60 is disposed (abnormal state) are smaller than the threshold. Therefore, when a metal foreign matter 60 is placed nearby the power-supplying resonator 22 of the power-supplying module 2, while the wireless power transmission is taking place in the wireless power transmission apparatus 1, the power supply to the power-supplying module 2 is turned off (shut off), thereby preventing problems (heat generation, Eddy current) caused by supplying power with the metal foreign matter 60 nearby the power-supplying resonator 22.

Further, switching on and off of the power supply is repeated at a predetermined cycle (intermittent operation) even while the metal foreign matter 60 is disposed nearby the power-supplying resonator 22 of the power-supplying module 2, to enable wireless power transmission after a transition occurs from the state of having the metal foreign matter 60 nearby the power-supplying resonator 22 of the power-supplying module 2 to the state for performing the wireless power transmission. With this intermittent operation, the power supply to the power-supplying module 2 is enabled upon a transition to the state where the power supply is possible between the power-supplying module 2 and the power-receiving module 3. This allows smooth transition from the state of having the metal foreign matter 60 to the state for performing the wireless power transmission. Further, since the intermittent operation, during the state of having the metal foreign matter 60, permits the power supply to the power-supplying module 2 only temporarily, it is possible to restrain problems such as heat generation or Eddy current caused by supplying power with the metal foreign matter 60 nearby the power-supplying resonator 22.

(Modification)

The above embodiment deals with a power supply on/off control executed in the power source circuit 5, in a case of adopting a wireless power transmission apparatus 1 in which the power-source frequency is set to a frequency band corresponding to a peak band formed on the "high frequency side", out of the two peak bands, of the transmission characteristic. However, such a control is also possible in a case of setting the power-source frequency to the frequency band corresponding to a peak band formed on the "lower frequency side", out of the two peak bands, of the transmission characteristic.

In such a case, a wireless power transmission apparatus is such that a transmission characteristic with respect to a power-source frequency of power, in a power-supplying resonator of a power-supplying module and a power-receiving resonator of a power-receiving module exhibits two peak bands, and

a relation between a transmission input impedance to a non-transmission input impedance satisfies a condition of the non-transmission input impedance < the transmission input impedance, while the power-source frequency is set to a frequency band corresponding to a peak band on a lower side out of the two peak bands of the transmission characteristic, the transmission input impedance being input impedance while wireless power transmission is taking place between the power-supplying module and the power-receiving module, and the non-transmission input impedance being an input impedance during a non-transmission period in which no wireless power transmission is taking place. The wireless power transmission apparatus includes:

an oscillation output device capable of switching on and off of power supply to the power-supplying module;

a comparator circuit configured to compare a value of current detected by the current detector with a threshold, output a first signal when the value of current detected by the current detector is not more than the threshold, and output a second signal when the value of current detected by the current detector is more than the threshold, the threshold being set between a value of current input to the power-supplying module while wireless power supply is taking place between the power-supplying module and the power-receiving module and a value of current input to the power-supplying module while no wireless power transmission is taking place between the power-supplying module and the power-receiving module;

a signal oscillator configured to execute an intermittent operation in which an alternate output of oscillation signal and a pause signal is repeated at a predetermined cycle; and

a logic circuit configured to execute a logical operation based on a signal from the comparator circuit and a signal from the signal oscillator, wherein the logic circuit outputs a turn-off signal to the oscillation output device when the result of the logical operation meets a power-shut off condition such that the signal from the comparator circuit is the second signal and the signal from the signal oscillator is the pause signal, the turn-off control signal being a signal which turns off power supply of the oscillation output device to the power-supplying module, and wherein the logic circuit outputs a turn-on control signal when the result of the logical operation does not meet the power-shut off condition, the turn-on control signal being a signal which turns on power supply of the oscillation output device to the power-supplying module.

When the condition of non-transmission input impedance < transmission input impedance is met in the above structure, the input current value while wireless power transmission is taking place between the power-supplying module and the power-receiving module is brought down lower than the input current value while no wireless power transmission is taking place between the power-supplying module and the power-receiving module. A threshold is set between the input current value while the wireless power transmission is taking place and the input current value while no wireless power transmission is taking place.

When the value of current input from the oscillation output device to the power-supplying module, which value is detected by the current detector, is not more than the threshold, the comparator circuit outputs the first signal. In this case, the logic circuit outputs to the oscillation output device the turn-on control signal which turns on power supply of the oscillation output device to the power-supplying module whether the signal output from the signal oscillator is the oscillation signal or the pause signal, so as to turn on (supply) power supply to the power-supplying module.

To the contrary, when the value of current input from the oscillation output device to the power-supplying module, which value is detected by the current detector, is greater than the threshold, the comparator circuit outputs the second signal.

In this case, the logic circuit outputs to the oscillation output device the turn-on control signal which turns on power supply of the oscillation output device to the power-supplying module when the signal output from the signal oscillator is the oscillation signal, so as to turn on (supply) power supply to the power-supplying module. Further, the logic circuit outputs to the oscillation output device the turn-off control signal which turns off power supply of the oscillation output device to the power-supplying module when the signal output from the signal oscillator is the pause signal (when the power-shut off condition is met; i.e., the signal from the comparator circuit is the second signal and the signal from the signal oscillator is the pause signal), so as to turn off (shut off) power supply to the power-supplying module.

With the structure of the wireless power transmission apparatus, power consumption is restrained by turning off (shutting off) the power supply to the power-supplying module, when transition occurs from the state where wireless power supply is taking place to the state where no wireless power supply is taking place.

Further, on and off of the power supply is repeated (intermittent operation) at a predetermined cycle while the power supply is not taking place, for the purpose of making transition from the state where the power supply is not taking place to the state where the wireless power supply is taking place. With this intermittent operation, the power supply to the power-supplying module is enabled upon a transition to the state where the power supply is possible between the power-supplying module and the power-receiving module. This restrains power consumption by the intermittent operation, and a smooth transition from the state of no power supply to the state where the power supply is taking place.

(Other Embodiments)

Although the above description of the manufacturing method deals with an RF headset 102 as an example, the method is applicable to any devices having a secondary battery; e.g., tablet PCs, digital cameras, mobile phones, earphone-type music player, hearing aids, and sound collectors.

Although the above description deals with a wireless power transmission apparatus 1 configured to perform power transmission by magnetic coupling using a resonance phenomenon (magnetic resonant state) between resonators (coils) provided to a power-supplying module 2 and a power-receiving module 3, the present invention is applicable to a wireless power transmission apparatus 1 configured to perform power transmission by using resonance and electromagnetic induction between coils provided in the power-supplying module and the power-receiving module.

Further, although the above description assumes the wireless power transmission apparatus 1 is mounted in a portable electronic device, the use of such an apparatus is not limited to small devices. For example, with a modification to the specifications according to the required power amount, the wireless power transmission apparatus 1 is mountable to a relatively large system such as a wireless charging system in an electronic vehicle (EV), or to an even smaller device such as a wireless endoscope for medical use.

Although the above descriptions have been provided with regard to the characteristic parts so as to understand the present invention more easily, the invention is not limited to the embodiments and the examples as described above and can be applied to the other embodiments and examples, and the applicable scope should be construed as broadly as possible. Furthermore, the terms and phraseology used in the specification have been used to correctly illustrate the present invention, not to limit it. In addition, it will be understood by those skilled in the art that the other structures, systems, methods and the like included in the spirit of the present invention can be easily derived from the spirit of the invention described in the specification. Accordingly, it should be considered that the present invention covers equivalent structures thereof without departing from the spirit and scope of the invention as defined in the following claims. In addition, it is required to sufficiently refer to the documents that have been already disclosed, so as to fully understand the objects and effects of the present invention.

1. Wireless Power Transmission Apparatus
2. Power-Supplying Module
3. Power-Receiving Module
5. Power Source Circuit
6. AC/DC power source
7. Stabilizer Circuit
8. Charging Circuit
9. Secondary Battery
10. Target Device (Device to be Powered)
11. Oscillation Output Device
12. Current Detector
13. Comparator Circuit
14. Signal Oscillator
15. Logic Circuit
21. Power-Supplying Coil
22. Power-Supplying Resonator
31. Power-Receiving Coil
32. Power-Receiving Resonator
60. Metal Foreign Matter
101. Charger
102. RF Headset

**Claims**

1. A wireless power transmission apparatus in which a transmission characteristic with respect to a power-source frequency of power, in a power-supplying resonator of a power-supplying module and a power-receiving resonator of a power-receiving module exhibits two peak bands, and
a relation between a transmission input impedance to a non-transmission input impedance satisfies a condition of the non-transmission input impedance > the transmission input impedance, while the power-source frequency is set to a frequency band corresponding to a peak band on a higher side out of the two peak bands of the transmission characteristic, the transmission input impedance being input impedance while wireless power transmission is taking place between the power-supplying module and the power-receiving module, and the non-transmission input impedance being an input impedance during a non-transmission period in which no wireless power transmission is taking place, said wireless power transmission apparatus comprising:

an oscillation output device capable of switching on and off of power supply to the power-supplying module;
a current detector configured to detect a value of current input from the oscillation output device to the power-supplying module;
a comparator circuit configured to compare a value of current detected by the current detector with a threshold, output a first signal when the value of current detected by the current detector equals or surpasses the threshold, and output a second signal when the value of current detected by the current detector is smaller than the threshold, the threshold being set between a value of current input to the power-supplying module while wireless power supply is taking place between the power-supplying module and the power-receiving module and a value of current input to the power-supplying module while no wireless power transmission is taking place between the power-supplying module and the power-receiving module;
a signal oscillator configured to execute an intermittent operation in which an alternate output of oscillation signal and a pause signal is repeated at a predetermined cycle; and
a logic circuit configured to execute a logical operation based on a signal from the comparator circuit and a signal from the signal oscillator, wherein the logic circuit outputs a turn-off signal to the oscillation output device when the result of the logical operation meets a power-shut off condition such that the signal from the comparator circuit is the second signal and the signal from the signal oscillator is the pause signal, the turn-off control signal being a signal which turns off power supply of the oscillation output device to the power-supplying module, and wherein the logic circuit outputs a turn-on control signal when the result of the logical operation does not meet the power-shut off condition, the turn-on control signal being a signal which turns on power supply of the oscillation output device to the power-supplying module.

2. The wireless power transmission apparatus according to claim 1, wherein,
where the power-source frequency is set at a frequency band corresponding to the peak band on the high frequency side out of the two peak bands of the transmission characteristic, the transmission input impedance, the abnormality input impedance, and a standby input impedance of the power-supplying module satisfy the relations of: the standby input impedance > transmission input impedance; the abnormality input impedance > transmission input impedance, the transmission input impedance being the input impedance of the wireless power transmission apparatus while the power-supplying resonator and the power-receiving resonator are positioned to face each other and the abnormality input impedance the input impedance of the wireless power transmission apparatus while a metal foreign matter is disposed nearby the power-supplying resonator;
wherein a threshold is set between a transmission input current value and a standby input current value when the abnormality input impedance $\geq$ the standby input impedance, the transmission input current value being a value of an input current while the wireless power transmission is taking place between the power-supplying module and the power-receiving module and the standby input current value being a value of an input current while no wireless power transmission is taking place between the power-supplying module and the power-receiving module, and the power-supplying module is in the standby state for power transmission; and
wherein a threshold is set between the transmission input current value and an abnormality input current value when the standby input impedance > the abnormality input impedance, the transmission input current value being a value of an input current while the wireless power transmission is taking place between the power-supplying module and the power-receiving module and an abnormality input current value being a value of an input current while a metal foreign matter is disposed nearby the power-supplying resonator of the power-supplying module.

FIG.1

EP 3 157 117 A1

FIG.2

Z_in

Z_in

POWER SOURCE CIRCUIT

G1

$R_L$

21 22 → 2

32 31 → 3

$R_1$  $C_1$  21

$C_2$  $R_2$  22 32

$C_3$  $R_3$  31

$C_4$  $R_4$

$I_1$  $L_1$

$L_2$  $I_2$

$I_3$  $L_3$

$L_4$  $I_4$

$R_L$ ($Z_L$)

$M_{12}$

$M_{23}$

$M_{34}$

EP 3 157 117 A1

## FIG.3

110   111   112

G2

d12   d23   d34

G1

21   22   32   31

2   3

G2

MEASUREMENT OF TRANSMISSION CHARACTERISTIC "S21" IN POWER-SUPPLYING RESONATOR 22 AND POWER-RECEIVING RESONATOR 32

# FIG.4

(GRAPH IN WHICH TRANSMISSION CHARACTERISTIC "S21"
BETWEEN RESONATORS EXHIBITS TWO PEAKS)

TRANSMISSION CHARACTERISTIC "S21"
BETWEEN POWER-SUPPLYING RESONATOR
AND POWER-RECEIVING RESONATOR

**FIG.5**

FIG.6

## FIG.7

(SINGLE-HUMP CHARACTERISTIC)

FIG.8

FIG.9

FIG.10

# FIG.11

(MEASUREMENT EXPERIMENTS)

METAL FOREIGN MATTER 60 = ALUMINUM PIECE,
WHERE ALUMINUM PIECE A (12MMΦ, THICKNESS 0.5MM),
AND DISTANCE D23 = 3MM

**FIG.12**

POWER SUPPLY ON/OFF CONTROL FLOW

DETECT VALUE OF CURRENT BY CURRENT DETECTOR ── S11

S12

VALUE OF CURRENT DETECTED EQUALS TO OR SURPASSES PRESET THRESHOLD?

NO

S13 — YES

S14

S15 — INTERMITTENT OPERATION BY SIGNAL OSCILLATOR

OUTPUT LOW [0] (FIRST SIGNAL)

OUTPUT HIGH [1] (SECOND SIGNAL)

S16 — REPEAT ALTERNATED OUTPUT OF LOW [0] (OSCILLATION SIGNAL) AND HIGH [1] (PAUSE SIGNAL) AT PREDETERMINED CYCLE

S17

NO

OUTPUT FROM LOGIC CIRCUIT IS LOW [0]?

YES

S19

S18

OUTPUT TURN-OFF CONTROL SIGNAL

OUTPUT TURN-ON CONTROL SIGNAL

END

EP 3 157 117 A1

FIG.13

(LOGICAL PRODUCT TABLE)

| OUTPUT OF COMPARATOR CIRCUIT | OUTPUT OF SIGNAL OSCILLATOR | OUTPUT OF LOGIC CIRCUIT (LOGICAL PRODUCT) |
|---|---|---|
| LOW [0] (FIRST SIGNAL) | LOW [0] (OSCILLATION SIGNAL) | LOW [0] (TURN-ON CONTROL SIGNAL) |
| LOW [0] (FIRST SIGNAL) | HIGH [1] (PAUSE SIGNAL) | LOW [0] (TURN-ON CONTROL SIGNAL) |
| HIGH [1] (SECOND SIGNAL) | LOW [0] (OSCILLATION SIGNAL) | LOW [0] (TURN-ON CONTROL SIGNAL) |
| HIGH [1] (SECOND SIGNAL) | HIGH [1] (PAUSE SIGNAL) | HIGH [1] (TURN-OFF CONTROL SIGNAL) |

## INTERNATIONAL SEARCH REPORT

| International application No. |
| --- |
| PCT/JP2015/065090 |

**A.  CLASSIFICATION OF SUBJECT MATTER**
*H02J17/00(2006.01)i*

According to International Patent Classification (IPC) or to both national classification and IPC

**B.  FIELDS SEARCHED**

Minimum documentation searched (classification system followed by classification symbols)
H02J17/00

Documentation searched other than minimum documentation to the extent that such documents are included in the fields searched
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| A | JP 2010-239769 A  (Fujitsu Ltd.), 21 October 2010 (21.10.2010), paragraph [0025]; fig. 7 & US 2010/0244580 A1 | 1-2 |
| A | JP 2009-112153 A  (Meleagros Corp.), 21 May 2009 (21.05.2009), paragraphs [0438] to [0483]; fig. 84 to 90 (Family: none) | 1-2 |

☐ Further documents are listed in the continuation of Box C.   ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 July 2015 (10.07.15) | 21 July 2015 (21.07.15) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013239692 A
- JP 2011050140 A
- JP 2012182975 A